(19) Europäisches Patentamt

European Patent Office

Office européen des brevets

(11) **EP 3 083 863 B1**

(12) **FASCICULE DE BREVET EUROPEEN**

(45) Date de publication et mention de la délivrance du brevet:
**10.04.2019 Bulletin 2019/15**

(21) Numéro de dépôt: **14814943.8**

(22) Date de dépôt: **24.11.2014**

(51) Int Cl.:
**C09J 123/06** *(2006.01)*   **C09J 123/08** *(2006.01)*
**C09J 151/06** *(2006.01)*   **B32B 15/085** *(2006.01)*
**B32B 37/12** *(2006.01)*

(86) Numéro de dépôt international:
**PCT/FR2014/053006**

(87) Numéro de publication internationale:
**WO 2015/092184 (25.06.2015 Gazette 2015/25)**

(54) **LIANT POUR STRUCTURE MULTICOUCHE**

BINDEMITTEL FÜR EINE MEHRSCHICHTIGE STRUKTUR

BINDER FOR A MULTILAYER STRUCTURE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.12.2013 FR 1362883**

(43) Date de publication de la demande:
**26.10.2016 Bulletin 2016/43**

(73) Titulaire: **Arkema France**
**92700 Colombes (FR)**

(72) Inventeurs:
• **QUINEBECHE, Sébastien**
**F-27300 Bernay (FR)**

• **MICHALOWICZ, Claire**
**F-27000 Evreux (FR)**
• **DEVISME, Samuel**
**F-76000 Rouen (FR)**

(74) Mandataire: **Gorintin, Sarah et al**
**ARKEMA France**
**Département Propriété Industrielle**
**420, rue d'Estienne d'Orves**
**92705 Colombes Cedex (FR)**

(56) Documents cités:
**EP-A1- 1 136 536**

**Description**

**Domaine de l'invention**

La présente invention concerne un liant pour structures multicouches comportant classiquement une couche métallique. Ce liant est plus spécifiquement un liant d'extrusion à base de polyéthylènes cogreffés et l'invention concerne son utilisation pour réaliser une structure multicouche ainsi que la structure obtenue.

Plus particulièrement, l'invention concerne un liant d'extrusion couchage/lamination ou de (co)extrusion couchage/lamination à base de polyéthylène comportant un mélange de deux types de polyéthylène, l'un métallocène et l'autre radicalaire basse densité, ledit mélange étant cogreffé par un acide carboxylique insaturé et ce mélange étant disposé dans une matrice de polyéthylène radicalaire basse densité.

L'invention se rapporte au domaine des emballages de type sachets, sacs, poches ou paquets réalisés à partir de ces films soudés. On peut citer de façon non limitative par exemple les paquets de chips, biscuits, bonbons, cafés.

**Etat de l'art**

Un tel liant comporte classiquement une matrice de polyéthylène, classiquement de type polyéthylène radicalaire basse densité (PEBD), pour ses propriétés de processabilité mais ce polymère seul n'adhère pas correctement sur une surface métallique, c'est pourquoi il faut lui adjoindre un agent d'adhésion également susceptible d'améliorer les propriétés mécaniques de l'ensemble dénommé « liant ».

On connaît le document EP 1136536, déposé au nom de la demanderesse, qui divulgue un agent d'adhésion consistant en un mélange de polyéthylène, l'un consistant en un polyéthylène métallocène d'une densité particulière et l'autre consistant en un polyéthylène linéaire basse densité non métallocène (PEBDL), cogreffé par un acide carboxylique insaturé et plus particulièrement un anhydride maléique. Cet agent d'adhésion est disposé dans une matrice consistant en un polyéthylène.

En particulier les exemples 4 et 8 présentent des compositions de polyéthylène comportant un polyéthylène basse densité linéaire et un polyéthylène métallocène dans une matrice polyéthylène linéaire (≠ radicalaire).

Ce type de liants est satisfaisant d'un point de vue des propriétés mécaniques et d'adhésion sur métal mais sa processabilité en extrusion couchage/lamination, c'est-à-dire sa capacité à être étiré à l'état fondu dans l'air gap (distance dans l'air avant de rencontrer le(s) substrat(s) solide), est très délicate et entraîne trop souvent des problèmes de « neck-in » (réduction de la largeur du film lié au comportement viscoélastique du polymère) et/ou d'étirabilité qui compromettent gravement l'obtention d'un film viable industriellement. Les exemples 24 et 25 du tableau ci-dessous reprennent respectivement les exemples de compositions 4 et 8 de ce document EP 1136536.

On connaît également le document WO 2004/072200 qui divulgue un agent d'adhésion consistant en un mélange de polyoléfines, l'une consistant en un polyéthylène métallocène d'une densité particulière et l'autre consistant soit en un polyéthylène linéaire basse densité non métallocène (PEBDL), soit en un polypropylène, cogreffé par un acide carboxylique insaturé ou un dérivé fonctionnel de cet acide en tant que monomère de greffage. Cet agent d'adhésion est disposé dans une matrice consistant en un polypropylène.

Ce liant ne montre pas des propriétés d'adhésion sur métal satisfaisantes et la processabilité reste encore peu acceptable.

Enfin, on connaît également une dernière solution qui consiste à utiliser des terpolymères comme agent d'adhésion, tel que notamment un éthylène-acrylate d'isobutyle-acide méthacrylique. Mais cette solution nécessite des coûts d'installation et de production très élevés car la production d'un tel terpolymère doit être réalisée dans un réacteur haute pression. Par ailleurs, de tels terpolymères sont susceptibles de dégager des odeurs dérangeantes de par la présence de monomères acrylates résiduels.

Il manque donc à l'heure actuelle sur le marché un liant économique qui puisse satisfaire l'ensemble des conditions de mise en oeuvre et de fonctionnalité, à savoir en premier lieu une processabilité en extrusion couchage/lamination (en particulier « neck-in » et limite d'étirabilité) et une fluidité à l'état fondu (MFI « Melt Flow Index » ou indice d'écoulement à l'état fondu) irréprochables et deuxièmement d'excellentes caractéristiques mécaniques et d'adhésion sur un métal.

**Brève description de l'invention**

De façon surprenante, la demanderesse a découvert, en contradiction avec les enseignements de l'art antérieur (critère de processabilité ainsi que MFI) qu'il est possible de préparer un mélange contenant un agent d'adhésion consistant en deux polyéthylènes de nature radicalement différente cogreffés par un acide carboxylique insaturé et contenant un polyéthylène radicalaire basse densité. Ce mélange présente des propriétés de processabilité et d'adhésion sur métal bien supérieures aux compositions de l'état de la technique.

La présente invention concerne ainsi un liant pour structures multicouches, comprenant :

- de 60% à 95%, en poids de la composition, d'une matrice en polyéthylène choisi parmi les polyéthylènes radicalaires basse densité (PEBD),
- de 5% à 40%, en poids de la composition, d'un mélange de deux polyéthylènes, le premier polyéthylène consistant en un polyéthylène métallocène, cogreffé par un acide carboxylique insaturé, monomère de greffage, les greffons d'acide carboxylique insaturé représentant plus de 0,5% en poids du mélange, caractérisée en ce que le second polyéthylène consiste en un polyéthylène radicalaire basse densité (PEBD) et en ce que le MFI ou indice d'écoulement à l'état fondu (norme ASTM D 1238, à 190°C, sous 2,16 kg) est compris entre 4 et 15 g/10 min

Dans la suite, le terme « multicouche » est indifféremment au pluriel ou au singulier et désigne un ensemble formé d'une pluralité de couches.

D'autres caractéristiques ou modes de réalisation de l'invention sont présentées ci-après :

- avantageusement, le premier polyéthylène est présent dans le mélange à hauteur de 50% à 70% en poids du mélange de polyéthylène.
- de préférence, le MFI ou indice d'écoulement à l'état fondu du mélange de deux polyéthylènes est compris entre 5 et 10 g/10 min.
- selon un aspect particulièrement avantageux, les greffons d'acide carboxylique insaturé du mélange de deux polyéthylènes représentent entre 0,5% et 2%, de préférence entre 0,6% et 1,2%, en poids du mélange de polyéthylènes.
- avantageusement, l'acide carboxylique insaturé consiste en l'anhydride maléique.
- selon une possibilité offerte par l'invention, le liant comprend entre 0,1 % et 5 % d'additifs fonctionnels choisis parmi des agents antibloquants, glissants, antioxydants, des charges, des pigments, des colorants et des agents dits « processing aid », pour faciliter la mise en oeuvre de cette composition en extrusion-couchage ou extrusion-lamination.

Certains de ces additifs peuvent être introduits dans la composition sous forme de mélanges-maîtres.

L'invention présente notamment les avantages de pouvoir être mise en oeuvre facilement, sans risque de détérioration du film produit.

La présente invention se rapporte également à une structure multicouche, comportant une pluralité de couches adjacentes dont au moins une couche métallique, caractérisée en ce que le liant tel que décrit ci-dessus est fixé directement sur la couche métallique.

De préférence, la couche métallique est une couche d'aluminium, de fer, de cuivre, d'étain, de nickel, d'argent, de chrome, d'or, de zinc ou un alliage contenant au moins un de ces métaux majoritairement (plus de 60% en poids de l'alliage). Dans la suite, seul un support en aluminium a été testé et présenté ici mais les résultats recueillis sur ce support sont identiques, ou quasi-similaires, sur les autres supports mentionnés ci-dessus.

Enfin, l'invention se rapporte à un procédé de fabrication de la structure multicouche susmentionnée, comportant une étape de réalisation du liant décrit ci-dessus, ledit liant étant disposé sous forme de film entre une couche métallique et une couche de polymère, caractérisé en ce que la disposition dudit liant est réalisée par extrusion couchage/lamination ou par coextrusion couchage/lamination.

La description qui va suivre est donnée uniquement à titre illustratif et non limitatif.

## Description détaillée de l'invention

S'agissant de la matrice polyéthylène, il s'agit d'un polyéthylène basse densité (PEBD) polymérisé par voie radicalaire sous très haute pression (1 800 à 3 000 bar). Les polyéthylènes basse densité radicalaire sont par définition des polymère non linéaires. Les polyéthylènes basse densité sont des produits bien connus de l'homme du métier et disponibles dans le commerce. Les polyéthylènes basse densité sont de densités comprises entre 0,91 et 0,94.

S'agissant du premier polyéthylène du mélange de polyéthylène, il s'agit d'un polyéthylène métallocène.

On désigne par polyéthylène métallocène les polymères obtenus par copolymérisation d'éthylène et d'alpha oléfine telle que par exemple propylène, butène, hexène ou octène en présence d'un catalyseur monosite constitué généralement d'un atome d'un métal pouvant être par exemple du zirconium ou du titane et de deux molécules cycliques alkyles liées au métal. Plus spécifiquement, les catalyseurs métallocènes sont habituellement composés de deux cycles cyclopentadiéniques liés au métal. Ces catalyseurs sont fréquemment utilisés avec des aluminoxanes comme cocatalyseurs ou activateurs, de préférence le méthylaluminoxane (MAO). Le hafnium peut aussi être utilisé comme métal auquel le cyclopentadiène est fixé. D'autres métallocènes peuvent inclure des métaux de transition des groupes IV A, V A, et VI A. Des métaux de la série des lanthanides peuvent aussi être utilisés.

Ces polyéthylènes métallocènes peuvent aussi être caractérisés par leur rapport $Mw/Mn < 3$ et de préférence < 2 dans lequel *Mw* et *Mn* désignent respectivement la masse molaire moyenne en poids et la masse molaire moyenne en nombre. On désigne aussi par polyéthylène métallocène ceux ayant un MFR (« Melt Flow Ratio » ou rapport d'indice de fluidité) inférieur à 6,53 et un rapport *Mw/Mn* supérieur à MFR moins 4,63. MFR désigne le rapport du MFI 10 (MFI sous une charge de 10 Kg) au MFI2 (MFI sous une charge de 2,16 Kg). D'autres polyéthylènes métallocènes sont définis par un MFR égal ou supérieur à 6,13 et un rapport *Mw/Mn* inférieur ou égal à MFR moins 4,63.

Avantageusement, la densité de du premier polyéthylène du mélange est comprise entre 0,900 et 0,930.

S'agissant du deuxième polyéthylène du mélange, il s'agit d'un polyéthylène basse densité (PEBD) polymérisé par voie radicalaire sous très haute pression (1 800 à 3 000 bar). Les polyéthylènes basse densité radicalaire sont par définition des polymère non linéaires. Les polyéthylènes basse densité sont des produits bien connus de l'homme du métier et disponibles dans le commerce. Les polyéthylènes basse densité sont de densités comprises entre 0,91 et 0,94.

Le mélange des polyéthylènes, le premier et le deuxième polyéthylène décrit ci-dessus, est greffé avec un acide carboxylique insaturé, c'est-à-dire que ces deux polyéthylènes sont cogreffés. On ne sortirait pas du cadre l'invention en utilisant un dérivé fonctionnel de cet acide.

Des exemples d'acides carboxyliques insaturés sont ceux ayant 2 à 20 atomes de carbone tels que les acides acrylique, méthacrylique, maléique, fumarique et itaconique. Les dérivés fonctionnels de ces acides comprennent par exemple les anhydrides, les dérivés esters, les dérivés amides, les dérivés imides et les sels métalliques (tels que les sels de métaux alcalins) des acides carboxyliques insaturés.

Des acides dicarboxyliques insaturés ayant 4 à 10 atomes de carbone et leurs dérivés fonctionnels, particulièrement leurs anhydrides, sont des monomères de greffage particulièrement préférés.

Ces monomères de greffage comprennent par exemple les acides maléique, fumarique, itaconique, citraconique, allylsuccinique, cyclohex-4-ène-1,2-dicarboxylique, 4-méthyl-cyclohex-4-ène-1,2-dicarboxylique, bicyclo(2,2,1)-hept-5-ène-2,3-dicarboxylique, x-méthylbicyclo(2,2,1)-hept-5-ène-2,3-dicarboxylique, les anhydrides maléique, itaconique, citraconique, allylsuccinique, cyclohex-4-ène-1,2-dicarboxylique, 4-méthylènecyclohex-4-ène-1,2-di-carboxylique, bicyclo(2,2,1) hept-5-ène-2,3-dicarboxylique, etx-méthylbicyclo(2,2,1)-hept-5-ène-2,2-dicarboxylique.

Des exemples d'autres monomères de greffage comprennent des esters alkyliques en $C_1$-$C_8$ ou des dérivés esters glycidyliques des acides carboxyliques insaturés tels que acrylate de méthyle, méthacrylate de méthyle, acrylate d'éthyle, méthacrylate d'éthyle, acrylate de butyle, méthacrylate de butyle, acrylate de glycidyle, méthacrylate de glycidyle, maléate de mono-éthyle, maléate de diéthyle, fumarate de monométhyle, fumarate de diméthyle, itaconate de monométhyle, et itaconate de diéthyle ; des dérivés amides des acides carboxyliques insaturés tels que acrylamide, méthacrylamide, monoamide maléique, diamide maléique, N-monoéthylamide maléique, N,N-diéthylamide maléique, N-monobutylamide maléique, N,N-dibutylamide maléique, monoamide furamique, diamide furamique, N-monoéthylamide fumarique, N,N-diéthylamide fumarique, N-monobutylamide fumarique et N,N-dibutylamide furamique; des dérivés imides des acides carboxyliques insaturés tels que maléimide, N-butylmaléimide et N-phénylmaléimide ; et des sels métalliques d'acides carboxyliques insaturés tels que acrylate de sodium, méthacrylate de sodium, acrylate de potassium, et méthacrylate de potassium. On préfère l'anhydride maléique.

Divers procédés connus peuvent être utilisés pour greffer un monomère de greffage sur le mélange des deux polyéthylènes.

Par exemple, ceci peut être réalisé en chauffant les polyéthylènes, métallocène et radicalaire, à température élevée, environ 150° à environ 300°C, en présence ou en l'absence d'un solvant avec ou sans générateur de radicaux. Des solvants appropriés qui peuvent être utilisés dans cette réaction sont le benzène, toluène, xylène, chlorobenzène, eumène entre autres. Des générateurs de radicaux appropriés qui peuvent être utilisés comprennent le t-butyl-hydroperoxyde, cumène-hydroperoxyde, di-iso-propyl-benzène-hydroperoxyde, di-t-butyl-peroxyde, di-t-amyl-peroxyde, t-butyl-cumyl-peroxyde, dicumyl-peroxyde, 1,3-bis-(t-butylperoxy-isopropyl)benzène, 2,5-dimethyl-2,5-di(t-butylperoxy)hexane, t-butyl-peroxybenzoate, t-butyl-peroxy-2-ethylhexanoate, OO-t-butyl-O-(2-ethyl-hexyl)-monoperoxycarbonate, OO-t-amyl-O-(2-ethyl-hexyl)-monoperoxycarbonate, acétyl-peroxyde, dibenzoyl-peroxyde, iso-butyryl-peroxyde, bis-3,5,5-triméthyl-hexanoyl-peroxyde et méthyl-éthyl-cétone-peroxyde

Avantageusement, le procédé de greffage consiste en l'extrusion du mélange de polyéthylène dans une extrudeuse bi-vis co-rotative en présence d'un générateur de radicaux, de l'anhydride maléique. La température est choisie de façon à ce que la réaction se déroule à l'état fondu du mélange de polyéthylène et que le générateur de radicaux se décompose totalement dans le temps imparti à l'extrusion. A noter qu'un dégazage est réalisé en bout d'extrudeuse afin de retirer du mélange de polyéthylène les produits de décomposition du générateur de radicaux et les monomères n'ayant pas réagi.

Dans le mélange, des premier et deuxième polyéthylènes, modifié par greffage obtenu de la façon susmentionnée, la quantité du monomère de greffage peut être choisie d'une façon appropriée mais elle est de préférence de 0,5% à 2%, mieux de 0,6% à 1,2%, par rapport au poids mélange greffé.

La quantité du monomère greffé est déterminée par dosage des fonctions succiniques par spectroscopie IRTF (Infra-Rouge à Transformée de Fourier). Le MFI du mélange, c'est-à-dire des premier et deuxième polyéthylènes ayant été cogreffé, est 4 à 15 g/10 min, avantageusement entre 5 et 10 g/10 min.

L'association entre la matrice polyéthylène et le mélange de polyéthylènes cogreffés susmentionné est réalisée de façon parfaitement classique et bien connue de l'homme du métier, soit par simple mélange de granulés, soir par une étape de mélange à l'état fondu. L'épaisseur du liant selon l'invention, sous forme d'un film, est généralement comprise entre 5 et 30 microns (ou micromètre μm), de préférence entre 5 et 25 microns, de préférence encore entre 8 et 20 microns.

Le liant selon l'invention pourra avantageusement comprendre des additifs dans une proportion minoritaire, de l'ordre de 0,1% à 5% en poids du liant. Ces additifs peuvent être des agents anti-bloquants, glissants, antioxydants, des charges, des pigments, des colorants et des agents dits « processing aid », pour faciliter la mise en oeuvre de cette composition en extrusion-couchage ou extrusion-lamination. Certains de ces additifs peuvent être introduits dans la composition sous forme de mélanges-maîtres.

Obtention des formulations des compositions testées :

Les polyéthylènes greffés et les mélanges de polyéthylènes cogreffés testés ont été réalisés dans une extrudeuse bi-vis co-rotative ZSK26MC. Le monomère de greffage utilisé est l'anhydride maléique fourni par la société CristalMan et le générateur de radicaux est le Luperox® 101 de la société Arkema. L'alimentation de l'extrudeuse a été assurée par des doseurs pondéraux. Les conditions d'extrusion ont été : débit = 46kg/h, température = 250°C et vitesse de vis = 700rpm. Les quantités d'anhydride maléique et de Luperox 101 introduites sont ajustées en fonction du taux d'anhydride maléique et du MFI (Melt Flow index) visés. L'extrudeuse est équipée d'un puits de dégazage qui a permis la dévolatilisation des résiduels en bout d'extrudeuse à l'aide d'une pompe à anneaux liquides (P = -0,95 bar dans le puits de dégazage). Le polyéthylène greffé ou mélange de polyéthylènes cogreffés sorti de l'extrudeuse est refroidi au contact de l'eau puis granulé à l'aide d'un granulateur à joncs.

Les polyéthylènes greffés et les mélanges de polyéthylènes cogreffés testés ont ensuite été associés à un polyéthylène basse densité par simple mélange de granulés.

Les liants testés ainsi obtenus sont les suivants :

Exemple 1 : liant n'entrant pas dans le cadre de l'invention comprenant 100% d'un polyéthylène basse densité PEBD2.

Exemple 2 : liant n'entrant pas dans le cadre de l'invention comprenant 20% d'un agent d'adhésion consistant en un terpolymère éthylène-acrylate de butyle-acide acrylique associé à 80% d'un polyéthylène basse densité PEBD2.

Exemple 3 : liant entrant dans le cadre de l'invention comprenant 10% d'un agent d'adhésion consistant en un mélange de polyéthylène (40% d'un polyéthylène basse densité PEBD1 + 60% d'un polyéthylène métallocène mPE) cogreffé à hauteur de 0,68% d'anhydride maléique et présentant un MFI de 7,1 g/10min, associé à 90% d'un polyéthylène basse densité PEBD2.

Exemple 4 : liant entrant dans le cadre de l'invention comprenant 20% d'un agent d'adhésion consistant en un mélange de polyéthylène (40% d'un polyéthylène basse densité PEBD1 + 60% d'un polyéthylène métallocène mPE) cogreffé à hauteur de 0,68% d'anhydride maléique et présentant un MFI de 7,1 g/10min, associé à 80% d'un polyéthylène basse densité PEBD2.

Exemple 5 : liant entrant dans le cadre de l'invention comprenant 35% d'un agent d'adhésion consistant en un mélange de polyéthylène (40% d'un polyéthylène basse densité PEBD1 + 60% d'un polyéthylène métallocène mPE) cogreffé à hauteur de 0,68% d'anhydride maléique et présentant un MFI de 7,1 g/10min, associé à 65% d'un polyéthylène basse densité PEBD2.

Exemple 6 : liant n'entrant pas dans le cadre de l'invention comprenant 45% d'un agent d'adhésion consistant en un mélange de polyéthylène (40% d'un polyéthylène basse densité PEBD1 + 60% d'un polyéthylène métallocène mPE) cogreffé à hauteur de 0,68% d'anhydride maléique et présentant un MFI de 7,1 g/10min, associé à 55% d'un polyéthylène basse densité PEBD2.

Exemple 7 : liant entrant dans le cadre de l'invention comprenant 20% d'un agent d'adhésion consistant en un mélange de polyéthylène (60% d'un polyéthylène basse densité PEBD1 + 40% d'un polyéthylène métallocène mPE) cogreffé à hauteur de 0,71% d'anhydride maléique et présentant un MFI de 5,3 g/10min, associé à 80% d'un polyéthylène basse densité PEBD2.

Exemple 8 : liant entrant dans le cadre de l'invention comprenant 20% d'un agent d'adhésion consistant en un mélange de polyéthylène (20% d'un polyéthylène basse densité PEBD1 + 80% d'un polyéthylène métallocène mPE) cogreffé à hauteur de 0,66% d'anhydride maléique et présentant un MFI de 9,3 g/10min, associé à 80% d'un polyéthylène basse densité PEBD2.

Exemple 9 : liant n'entrant pas dans le cadre de l'invention comprenant 20% d'un agent d'adhésion consistant en un polyéthylène métallocène mPE greffé à hauteur de 0,74% d'anhydride maléique et présentant un MFI de 9,9 g/10min, associé à 80% d'un polyéthylène basse densité PEBD2.

Exemple 10 : liant n'entrant pas dans le cadre de l'invention comprenant 20% d'un agent d'adhésion consistant en un mélange de polyéthylène (40% d'un polyéthylène basse densité linéaire PEBDL + 60% d'un polyéthylène métallocène mPE) cogreffé à hauteur de 0,69% d'anhydride maléique et présentant un MFI de 6,5 g/10min, associé à 80% d'un polyéthylène basse densité PEBD2.

Exemple 11 : liant n'entrant pas dans le cadre de l'invention comprenant 20% d'un agent d'adhésion consistant en un polyéthylène basse densité PEBD2 greffé à hauteur de 0,60% d'anhydride maléique et présentant un MFI de 6,0 g/10min, associé à 80% d'un polyéthylène basse densité PEBD2.

Exemple 12 : liant n'entrant pas dans le cadre de l'invention comprenant 20% d'un agent d'adhésion consistant en un mélange de polyéthylène (40% d'un polyéthylène basse densité PEBD1 + 60% d'un polyéthylène métallocène mPE) cogreffé à hauteur de 0,68% d'anhydride maléique et présentant un MFI de 7,1 g/10min, associé à 80% d'un polypropylène PP.

Exemple 13 : liant n'entrant pas dans le cadre de l'invention comprenant 20% d'un agent d'adhésion consistant en un mélange de polyéthylène (40% d'un polyéthylène basse densité PEBD1 + 60% d'un polyéthylène métallocène mPE) cogreffé à hauteur de 0,41% d'anhydride maléique et présentant un MFI de 9,7 g/10min, associé à 80% d'un polyéthylène basse densité PEBD2.

Exemple 14 : liant entrant dans le cadre de l'invention comprenant 20% d'un agent d'adhésion consistant en un mélange de polyéthylène (40% d'un polyéthylène basse densité PEBD1 + 60% d'un polyéthylène métallocène mPE) cogreffé à hauteur de 0,55% d'anhydride maléique et présentant un MFI de 8,4 g/10min, associé à 80% d'un polyéthylène basse densité PEBD2.

Exemple 15 : liant entrant dans le cadre de l'invention comprenant 20% d'un agent d'adhésion consistant en un mélange de polyéthylène (40% d'un polyéthylène basse densité PEBD1 + 60% d'un polyéthylène métallocène mPE) cogreffé à hauteur de 1,12% d'anhydride maléique et présentant un MFI de 6,6 g/10min, associé à 80% d'un polyéthylène basse densité PEBD2.

Exemple 16 : liant entrant dans le cadre de l'invention comprenant 20% d'un agent d'adhésion consistant en un mélange de polyéthylène (40% d'un polyéthylène basse densité PEBD1 + 60% d'un polyéthylène métallocène mPE) cogreffé à hauteur de 1,28% d'anhydride maléique et présentant un MFI de 6,3 g/10min, associé à 80% d'un polyéthylène basse densité PEBD2.

Exemple 17 : liant entrant dans le cadre de l'invention comprenant 20% d'un agent d'adhésion consistant en un mélange de polyéthylène (40% d'un polyéthylène basse densité PEBD1 + 60% d'un polyéthylène métallocène mPE) cogreffé à hauteur de 1,83% d'anhydride maléique et présentant un MFI de 5,5 g/10min, associé à 80% d'un polyéthylène basse densité PEBD2.

Exemple 18 : liant n'entrant pas dans le cadre de l'invention comprenant 20% d'un agent d'adhésion consistant en un mélange de polyéthylène (40% d'un polyéthylène basse densité PEBD1 + 60% d'un polyéthylène métallocène mPE) cogreffé à hauteur de 2,18% d'anhydride maléique et présentant un MFI de 5,1 g/10min, associé à 80% d'un polyéthylène basse densité PEBD2.

Exemple 19 : liant n'entrant pas dans le cadre de l'invention comprenant 20% d'un agent d'adhésion consistant en un mélange de polyéthylène (40% d'un polyéthylène basse densité PEBD1 + 60% d'un polyéthylène métallocène mPE) cogreffé à hauteur de 0,72% d'anhydride maléique et présentant un MFI de 3,1 g/10min, associé à 80% d'un polyéthylène basse densité PEBD2.

Exemple 20 : liant entrant dans le cadre de l'invention comprenant 20% d'un agent d'adhésion consistant en un mélange de polyéthylène (40% d'un polyéthylène basse densité PEBD1 + 60% d'un polyéthylène métallocène mPE) cogreffé à hauteur de 0,71% d'anhydride maléique et présentant un MFI de 5,2 g/10min, associé à 80% d'un polyéthylène basse densité PEBD2.

Exemple 21 : liant entrant dans le cadre de l'invention comprenant 20% d'un agent d'adhésion consistant en un mélange de polyéthylène (40% d'un polyéthylène basse densité PEBD1 + 60% d'un polyéthylène métallocène mPE) cogreffé à hauteur de 0,62% d'anhydride maléique et présentant un MFI de 8,7 g/10min, associé à 80% d'un polyéthylène basse densité PEBD2.

Exemple 22 : liant entrant dans le cadre de l'invention comprenant 20% d'un agent d'adhésion consistant en un mélange de polyéthylène (40% d'un polyéthylène basse densité PEBD2 + 60% d'un polyéthylène métallocène mPE) cogreffé à hauteur de 0,72% d'anhydride maléique et présentant un MFI de 11,3 g/10min, associé à 80% d'un polyéthylène basse densité PEBD2.

Exemple 23 : liant entrant dans le cadre de l'invention comprenant 20% d'un agent d'adhésion consistant en un mélange de polyéthylène (40% d'un polyéthylène basse densité PEBD2 + 60% d'un polyéthylène métallocène mPE) cogreffé à hauteur de 0,67% d'anhydride maléique et présentant un MFI de 13,8 g/10min, associé à 80% d'un polyéthylène basse densité PEBD2.

Exemple 24 : liant n'entrant pas dans le cadre de l'invention comprenant 20% d'un agent d'adhésion consistant en un mélange de polyéthylène (40% d'un polyéthylène basse densité PEBD2 + 60% d'un polyéthylène métallocène mPE) cogreffé à hauteur de 0,61% d'anhydride maléique et présentant un MFI de 17,4 g/10min, associé à 80% d'un polyéthylène basse densité PEBD2.

Les liants testés ont été co-extrudés pour donner des structures Aluminium / Liant / PEBD2 / film PE - 37$\mu$m/10$\mu$m/50$\mu$m/50$\mu$m afin d'évaluer leurs propriétés d'adhésion sur aluminium. Ces structures ont été réalisées sur une extrudeuse de la marque Collin® en configuration extrusion lamination. L'extrudeuse est équipée d'un « feed block » (configuration 2 couches) et d'une filière plate d'entrefer 300$\mu$m et de largeur 25cm ($L_0$). Ces productions ont été réalisées à une température de 290°C pour une vitesse de ligne de 25m/min.

Matières premières des compositions testées :

PEBD1 : polyéthylène basse densité radicalaire, possédant un MFI (190°C, 2.16kg) de 7,5 g/10mn et une densité de 0,920.

PEBD2 : polyéthylène basse densité radicalaire, possédant un MFI (190°C, 2.16kg) de 4 g/10mn et une densité de 0,925.

mPE1 : copolymère métallocène éthylène-hexène, possédant un MFI (190°C, 2.16kg) de 20 g/10mn et une densité de 0,915.

mPE2 : copolymère métallocène éthylène-octène, possédant un MFI (190°C, 2.16kg) de 1 g/10mn et une densité de 0,870.

mPE3 : copolymère métallocène éthylène-octène, possédant un MFI (190°C, 2.16kg) de 1 g/10mn et une densité de 0,890.

PEBDL1: copolymère non métallocène éthylène-hexène, possédant un MFI (190°C, 2.16kg) de 3,0 g/10mn et une densité de 0,920.

PEBDL2: copolymère non métallocène éthylène-butène, possédant un MFI (190°C, 2.16kg) de 3,0 g/10mn et une densité de 0,920.

PEBDL3: copolymère non métallocène éthylène-butène, possédant un MFI (190°C, 2.16kg) de 3,0 g/10mn et une densité de 0,930.

PEBDL4: copolymère non métallocène éthylène-butène, possédant un MFI (190°C, 2.16kg) de 3,0 g/10mn et une densité de 0,910.

PP : copolymère propylène-éthylène, possédant un MFI (230°C, 2.16kg) de 7 g/10mn et une densité de 0,905.

Terpolymère : terpolymère éthylène-acrylate d'isobutyle-acide méthacrylique, possédant un MFI (190°C, 2.16kg) de 11 g/10mn et une densité de 0,920.

Tests réalisés :

*Test d'adhésion*

Toutes les compositions susvisées, considérées identiques en épaisseur, ont été testées selon exactement le même référenciel, à savoir sur un même support et selon un même test d'adhésion normé (en accord avec la norme ISO 11339).
Des bandelettes de 15 mm de large ont été découpées au centre de la laize et suivant le sens d'extrusion. Le revêtement polymère a été séparé manuellement du support sur une distance de quelques centimètres, puis les deux bras ainsi dégagés (respectivement aluminium et revêtement polymère) ont ensuite été placés chacun dans une des deux mâchoires d'une machine de traction Synergie 200 de MTS. La résistance au pelage a ensuite été évaluée avec une vitesse de pelage de 200 mm/min. 5 éprouvettes ont été testées par référence d'adhésif. Les tests ont été réalisés dans les 15 minutes suivant la mise en oeuvre (pelage à t0), et également après un conditionnement de 8 jours à 23°C et 50% d'humidité relative (pelage à t8j). Ainsi, l'adhésion est mesurée au regard d'une force de pelage.

*Test de processabilité*

Des essais ont été réalisées sur une extrudeuse de marque Dr COLLIN en configuration couchage, où nous couchons le liant testé sur une feuille d'aluminium (37 $\mu$m). L'ensemble de ces essais a été réalisé avec un profil de température de 280°C.
Nous choisissons une vitesse de vis et un air gap identiques pour tous les essais, puis nous lançons le film et réglons une vitesse de ligne de 5m/mn. Dans ces conditions nous relevons la largueur ($L_f$) et l'épaisseur ($e_f$) du film enduit
Une fois ces paramètres relevés, nous augmentons la vitesse de ligne jusqu'à l'observation des premières instabilités. Ces instabilités peuvent ce présenter sous plusieurs formes : rupture du « melt » ou « draw » résonance, bien connus de l'homme du métier (instabilité visible sur les bords du film qui entraîne une variation sur la largeur). Ces observations sont réalisées 3 fois de suite, afin de confirmer les résultats, et nous retenons une valeur moyenne de cette série pour l'exploitation des résultats.

Limite d'étirabilité (m/min) = vitesse de ligne où le début des instabilités (draw résonance ou rupture du melt) apparaissent.

Neck-in (%) = (Largeur de la filière – largeur du film enduit) / largeur de la filière *100

= ($L_0$-$L_f$)/$L_0$ *100

Résultats des tests :

| Compositions | Exemple 1 | Exemple 2 | Exemple 3 | Exemple 4 | Exemple 5 | Exemple 6 | Exemple 7 | Exemple 8 | Exemple 9 | Exemple 10 | Exemple 11 | Exemple 12 | Exemple 13 | Exemple 14 |
|---|---|---|---|---|---|---|---|---|---|---|---|---|---|---|
| *agent d'adhésion* | 0% | 20% | 10% | 20% | 35% | 45% | 20% | 20% | 20% | 20% | 20% | 20% | 20% | 20% |
| base(s) | | terpolymère | 60% mPE1 + 40% PEBD1 | 60% mPE1 + 40% PEBD1 | 60% mPE1 + 40% PEBD1 | 60% mPE1 + 40% PEBD1 | 40% mPE1 + 60% PEBD1 | 80% mPE1 + 20% PEBD1 | 100% mPE1 | 60% mPE1 + 40% PEBDL1 | 100% PEBD2 | 60% mPE1 + 40% PEBD1 | 60% mPE1 + 40% PEBD1 | 60% mPE1 + 40% PEBD1 |
| taux anhydride maléique greffé (% massique) | | | 0,68 | 0,68 | 0,68 | 0,68 | 0,71 | 0,66 | 0,74 | 0,69 | 0,60 | 0,68 | 0,41 | 0,55 |
| MFI (g/10min à 190°C sous 2.16kg) | | 11 | 7,1 | 7,1 | 7,1 | 7,1 | 5,3 | 9,3 | 11,9 | 6,5 | 6,0 | 7,1 | 9,7 | 8,4 |
| *matrice PE* | 100% | 80% | 90% | 80% | 65% | 55% | 80% | 80% | 80% | 80% | 80% | 80% | 80% | 80% |
| base | PEBD2 | PEBD2 | PEBD2 | PEBD2 | PEBD2 | PEBD2 | PEBD2 | PEBD2 | PEBD2 | PEBD2 | PEBD2 | PP | PEBD2 | PEBD2 |
| **Résultats** | | | | | | | | | | | | | | |
| Limite d'étirabilité (m/min) | 37 | 35 | 36 | 35 | 28 | 23 | 33 | 31 | 21 | 20 | 15 | 10 | 36 | 35 |
| NECK-IN (%) | 8 | 8 | 9 | 9 | 9 | 10 | 9 | 9 | 14 | 15 | 8 | 18 | 11 | 10 |
| Force de pelage à t0 (N/15mm) | 1,5 | 2,2 | 2,2 | 2,5 | 2,7 | 2,8 | 2,2 | 2,3 | 2,1 | 2,1 | 2,2 | 1,6 | 1,9 | 2,1 |
| Force de pelage à t8j (N/15mm) | 0,4 | 1,9 | 1,9 | 2,9 | 3 | 3,1 | 2,1 | 2,1 | 2,3 | 1,9 | 2,1 | 0,4 | 1,5 | 1,9 |

| Compositions | Exemple 4 | Exemple 15 | Exemple 16 | Exemple 17 | Exemple 18 | Exemple 19 |
|---|---|---|---|---|---|---|
| *agent d'adhésion* | 20% | 20% | 20% | 20% | 20% | 20% |
| base(s) | 60% mPE1 + 40% PEBD1 | 60% mPE1 + 40% PEBD1 | 60% mPE1 + 40% PEBD1 | 60% mPE1 + 40% PEBD1 | 60% mPE1 + 40% PEBD1 | 60% mPE1 + 40% PEBD1 |
| taux anhydride maléique greffé (% massique) | 0,68 | 1,12 | 1,28 | 1,83 | 2,18 | 0,71 |
| MFI (g/10min à 190°C sous 2.16kg) | 7,1 | 6,6 | 6,3 | 5,5 | 5,1 | 5,2 |
| *matrice PE* | 80% | 80% | 80% | 80% | 80% | 80% |
| base | PEBD2 | PEBD2 | PEBD2 | PEBD2 | PEBD2 | PEBD2 |
| **Résultats** | | | | | | |
| Limite d'étirabilité (m/min) | 35 | 33 | 29 | 26 | 20 | 28 |
| NECK-IN (%) | 9 | 9 | 9 | 8 | 8 | 9 |
| Force de pelage à t0 (N/15mm) | 2,5 | 2,6 | 2,7 | 2,7 | 2,7 | 2,5 |
| Force de pelage à t8j (N/15mm) | 2,9 | 3 | 3,1 | 3 | 3,1 | 2,8 |

| Compositions | Exemple 20 | Exemple 21 | Exemple 22 | Exemple 23 | Exemple 24 | Exemple 25 |
|---|---|---|---|---|---|---|
| *agent d'adhésion* | 20% | 20% | 20% | 20% | 20% | 20% |
| base(s) | 60% mPE1 + 40% PEBD1 | 60% mPE1 + 40% PEBD2 | 60% mPE1 + 40% PEBD2 | 60% mPE1 + 40% PEBD2 | 50% mPE2 + 50% PEBDL2 | 50% mPE3 + 50% PEBDL3 |
| taux anhydride maléique greffé (% massique) | 0,62 | 0,72 | 0,67 | 0,61 | 0,70 | 0,70 |
| MFI (g/10min à 190°C sous 2.16kg) | 8,7 | 11,3 | 13,8 | 17,4 | 1,2 | 0,9 |
| *matrice PE* | 80% | 80% | 80% | 80% | 80% | 80% |
| base | PEBD2 | PEBD2 | PEBD2 | PEBD2 | PEBDL4 | PEBDL2 |
| **Résultats** | | | | | | |
| Limite d'étirabilité (m/min) | 32 | 29 | 27 | 21 | 4 | 3 |
| NECK-IN (%) | 10 | 13 | 14 | 16 | 20 | 20 |
| Force de pelage à t0 (N/15mm) | 2,4 | 2,6 | 2,5 | 2,3 | 2,0 | 1,9 |
| Force de pelage à t8j (N/15mm) | 2,7 | 3 | 2,9 | 2,6 | 1,8 | 1,8 |

De manière générale, les résultats suivants pour les différents tests doivent être obtenus pour qu'une composition soit satisfaisante dans l'application envisagée :
La limite d'étirabilité doit être supérieure à 25 m/min et plus préférentiellement supérieure à 30 m/min (mètre par minute).
Le neck-in doit être inférieur 15 % et plus préférentiellement inférieur 10 %.
La force de pelage à $t_0$ doit être supérieure 2 N/15 mm (Newton par millimètre) et plus préférentiellement supérieure à 2,2 N/15 mm.
La force de pelage à t 8 jours (au bout de huit jours) doit être supérieure à 1,8 N/15 mm et plus préférentiellement supérieure à 2,3 N/15 mm.

**Revendications**

1. Liant pour structures multicouches, comprenant :

   - de 60% à 95%, en poids de la composition, d'une matrice en polyéthylène choisi parmi les polyéthylènes radicalaires basse densité (PEBD),
   - de 5% à 40%, en poids de la composition, d'un mélange de deux polyéthylènes, le premier polyéthylène consistant en un polyéthylène métallocène, cogreffé par un acide carboxylique insaturé, monomère de greffage, les greffons d'acide carboxylique insaturé représentant plus de 0,5% en poids du mélange, **caractérisée en ce que** le second polyéthylène consiste en un polyéthylène radicalaire basse densité (PEBD) et **en ce que** le MFI ou indice d'écoulement à l'état fondu (norme ASTM D 1238, à 190°C, sous 2,16 kg) est compris entre 4 et 15 g/10 min.

2. Liant selon la revendication 1, **caractérisée en ce que** le premier polyéthylène est présent dans le mélange à hauteur de 50% à 70% en poids du mélange de polyéthylène.

3. Liant selon la revendication 1 ou 2, **caractérisé en ce que** le MFI ou indice d'écoulement à l'état fondu du mélange de deux polyéthylènes est compris entre 5 et 10 g/10 min.

4. Liant selon l'une quelconque des revendications précédentes, **caractérisé en ce que** les greffons d'acide carboxylique insaturé du mélange de deux polyéthylènes représentent entre 0,5% et 2%, de préférence entre 0,6% et 1,2%, en poids du mélange de polyéthylènes.

5. Liant selon l'une quelconque des revendications précédentes, **caractérisé en ce que** l'acide carboxylique insaturé consiste en l'anhydride maléique.

6. Liant selon l'une quelconque des revendications précédentes, **caractérisé en ce qu'**il comprend entre 0,1 % et 5 % d'additifs fonctionnels choisis parmi des agents anti-bloquants, glissants, antioxydants, des charges, des pigments, des colorants et des agents dits « processing aid », pour faciliter la mise en oeuvre de cette composition en extrusion-couchage ou extrusion-lamination. Certains de ces additifs peuvent être introduits dans la composition sous forme de mélanges-maîtres.

7. Structure multicouche, comportant une pluralité de couches adjacentes dont au moins une couche métallique, **caractérisée en ce que** le liant selon l'une quelconque des revendications précédentes est fixé directement sur la couche métallique.

8. Structure multicouche selon la revendication précédente, **caractérisée en ce que** la couche métallique est une couche d'aluminium, de fer, de cuivre, d'étain, de nickel, d'argent, de chrome, d'or, de zinc ou un alliage contenant au moins un de ces métaux.

9. Procédé de fabrication d'une structure multicouche selon la revendication 7 ou 8, comportant une étape de fabrication du liant selon l'une quelconque des revendications 1 à 6, ledit liant étant ensuite disposé sous forme de film entre une couche métallique et une couche de polymère, **caractérisé en ce que** la disposition dudit liant est réalisée par extrusion couchage/lamination ou par coextrusion couchage/lamination.

**Patentansprüche**

1. Bindemittel für mehrschichtige Strukturen, umfassend:

   - bezogen auf das Gewicht der Zusammensetzung 60 % bis 95 % einer Polyethylenmatrix, ausgewählt aus mittels radikalischer Polymerisation hergestellten Polyethylenen niedriger Dichte (PE-LD),
   - bezogen auf das Gewicht der Zusammensetzung 5 % bis 40 % einer Mischung aus zwei Polyethylenen, wobei das erste Polyethylen aus einem Metallocen-Polyethylen, cogepfropft mit einer ungesättigten Carbonsäure, Pfropfmonomer, besteht, wobei die gepfropften Seitenketten aus der ungesättigten Carbonsäure mehr als 0,5 Gew.-% der Mischung ausmachen, **dadurch gekennzeichnet, dass** das zweite Polyethylen aus einem mittels radikalischer Polymerisation hergestellten Polyethylen niedriger Dichte (PE-LD) besteht und dadurch, dass der MFI oder Schmelzindex (Norm ASTM D 1238, bei 190°C und 2,16 kg) zwischen 4 und 15 g/10 min liegt.

2. Bindemittel nach Anspruch 1, **dadurch gekennzeichnet, dass** das erste Polyethylen in der Mischung in einer Höhe von 50 Gew.-% bis 70 Gew.-% der Polyethylenmischung vorliegt.

3. Bindemittel nach Anspruch 1 oder 2, **dadurch gekennzeichnet, dass** der MFI oder Schmelzindex der Mischung aus zwei Polyethylenen zwischen 5 und 10 g/10 min liegt.

4. Bindemittel nach einem der vorhergehenden Ansprüche, **dadurch gekennzeichnet, dass** die gepfropften Seitenketten aus einer ungesättigten Carbonsäure in der Mischung aus zwei Polyethylenen zwischen 0,5 Gew.-% und 2 Gew.-%, vorzugsweise zwischen 0,6 Gew.-% und 1,2 Gew.-% der Polyethylenmischung ausmachen.

5. Bindemittel nach einem der vorhergehenden Ansprüche, **dadurch gekennzeichnet, dass** die ungesättigte Carbonsäure aus Maleinsäureanhydrid besteht.

6. Bindemittel nach einem der vorhergehenden Ansprüche, **dadurch gekennzeichnet, dass** es zwischen 0,1 % und 5 % funktionelle Zusatzstoffe, ausgewählt aus Antiblockmitteln, Gleitmitteln, Antioxidantien, Füllstoffen, Pigmenten, Farbstoffen und Verarbeitungshilfsmitteln, zum Ermöglichen der Verwendung dieser Zusammensetzung bei der Extrusionsbeschichtung oder Extrusionskaschierung umfasst. Bestimmte dieser Zusatzstoffe können in Form von Masterbatches in die Zusammensetzung eingebracht sein.

7. Mehrschichtige Struktur, die eine Vielzahl von benachbarten Schichten aufweist, wovon mindestens eine eine Metallschicht ist, **dadurch gekennzeichnet, dass** das Bindemittel nach einem der vorhergehenden Ansprüche direkt an der Metallschicht fixiert ist.

8. Mehrschichtige Struktur nach dem vorhergehenden Anspruch, **dadurch gekennzeichnet, dass** die Metallschicht eine Schicht aus Aluminium, Eisen, Kupfer, Zinn, Nickel, Silber, Chrom, Gold, Zink oder eine Legierung ist, die mindestens eins dieser Metalle enthält.

9. Verfahren zur Herstellung einer mehrschichtigen Struktur nach Anspruch 7 oder 8, das einen Schritt zur Herstellung des Bindemittels nach einem der Ansprüche 1 bis 6 umfasst, wobei das Bindemittel anschließend in Form eines Films zwischen einer Metallschicht und einer Polymerschicht angeordnet wird, **dadurch gekennzeichnet, dass** die Anordnung des Bindemittels durch Extrusionsbeschichtung/-kaschierung oder durch Coextrusionsbeschichtung/-kaschierung erfolgt.


**Claims**

1. A binder for multilayer structures, comprising:

   - from 60% to 95%, by weight of the composition, of a polyethylene matrix chosen from low-density radical polyethylenes (LDPE),
   - from 5% to 40%, by weight of the composition, of a mixture of two polyethylenes, the first polyethylene consisting of a metallocene polyethylene, cografted with an unsaturated carboxylic acid, the grafting monomer, the unsaturated carboxylic acid grafts representing more than 0.5% by weight of the mixture, **characterized in that** the second polyethylene consists of a low-density radical polyethylene (LDPE) and **in that** the MFI or meltflow index (standard ASTM D 1238, at 190°C, under 2.16 kg) is between 4 and 15 g/10 min.

**2.** The binder as claimed in claim 1, **characterized in that** the first polyethylene is present in the mixture in a proportion of from 50% to 70% by weight of the polyethylene mixture.

**3.** The binder as claimed in claim 1 or 2, **characterized in that** the MFI or melt flow index of the mixture of two polyethylenes is between 5 and 10 g/10 min.

**4.** The binder as claimed in any one of the preceding claims, **characterized in that** the unsaturated carboxylic acid grafts of the mixture of two polyethylenes represent between 0.5% and 2%, preferably between 0.6% and 1.2%, by weight of the polyethylene mixture.

**5.** The binder as claimed in any one of the preceding claims, **characterized in that** the unsaturated carboxylic acid consists of maleic anhydride.

**6.** The binder as claimed in any one of the preceding claims, **characterized in that** it comprises between 0.1% and 5% of functional additives chosen from antiblocking agents, glidants, antioxidants, fillers, pigments, colorants and processing aids, to facilitate the implementation of this extrusion-coating or extrusion-lamination composition. Some of these additives may be introduced into the composition in the form of masterbatches.

**7.** A multilayer structure, comprising a plurality of adjacent layers including at least one metallic layer, **characterized in that** the binder as claimed in any one of the preceding claims is attached directly to the metallic layer.

**8.** The multilayer structure as claimed in the preceding claim, **characterized in that** the metallic layer is a layer of aluminum, iron, copper, tin, nickel, silver, chromium, gold, zinc or an alloy containing at least one of these metals.

**9.** A process for manufacturing a multilayer structure as claimed in claim 7 or 8, comprising a step of preparing the binder as claimed in any one of claims 1 to 6, said binder then being arranged in the form of a film between a metallic layer and a layer of polymer, **characterized in that** the arrangement of said binder is produced by extrusion coating/lamination or by coextrusion coating/lamination.

**RÉFÉRENCES CITÉES DANS LA DESCRIPTION**

**Documents brevets cités dans la description**

- EP 1136536 A

- WO 2004072200 A